# EUROPÄISCHE PATENTSCHRIFT

(11) **EP 4 464 906 B1**
(45) Veröffentlichungstag und Bekanntmachung des Hinweises auf die Patenterteilung: **08.04.2026**
(21) Anmeldenummer: 23173649.7
(22) Anmeldetag: 16.05.2023
(51) Int. Cl.: F16C 13/00, F16C 13/02, F16C 25/06, F16C 35/063, B21D 43/09, B23D 35/00, B26D 1/22, B65H 27/00

(54) **LAGERUNGSANORDNUNG FÜR MATERIALFÖRDERVORRICHTUNGEN**
STORAGE ASSEMBLY FOR MATERIAL CONVEYING DEVICES
ENSEMBLE DE STOCKAGE POUR DISPOSITIFS DE TRANSPORT DE MATÉRIAUX

(43) Veröffentlichungstag der Anmeldung: 20.11.2024
(73) Patentinhaber: Zehnder & Sommer AG, 3400 Burgdorf (CH)
(72) Erfinder: LOHNER, Erich, 3400 Burgdorf (CH); FANKHAUSER, Urs, 3400 Burgdorf (CH)
(74) Vertreter: Bardehle Pagenberg Partnerschaft mbB Patentanwälte Rechtsanwälte

(56) Entgegenhaltungen:
- DE-A1- 3 908 010

## Beschreibung

### 1. Technisches Gebiet

Die vorliegende Erfindung betrifft eine Lagerungsanordnung für eine Rohrwalze, wie zum Beispiel für eine Rohrwalze eines Walzenvorschubs. Zur drehfesten Verbindung zwischen einer Lagerungswelle der Lagerungsanordnung und einer Rohrwalze eines Walzenvorschub wirkt eine Kraft im Wesentlichen in radialer Richtung.

Die vorliegende Erfindung betrifft außerdem einen Walzenvorschub, umfassend zumindest eine entsprechende Lagerungsanordnung.

### 2. Stand der Technik

Materialfördervorrichtungen, insbesondere Walzenvorschübe und Zangenvorschübe, werden beispielsweise zum Fördern und Vorschieben, insbesondere zum getakteten Vorschieben von Werkstücken, wie Bandmaterial oder Streifenmaterial, eingesetzt. Beispielhaft kommen Walzenvorschübe bei Stanzanwendung zum Einsatz. Das Werkstück wird hierbei getaktet vorgeschoben, wobei die Taktung des Vorschubs mit einem Stanzwerkzeug synchronisiert ist.

Ebenso sind Walzenvorschübe aus anderen Anwendungsgebieten bekannt. Beispielsweise kann ein Walzenvorschub eine profilierte Walze aufweisen und beim Vorschieben des Werkstücks die entsprechende Profilierung in das Werkstück einprägen oder einstanzen.

Das Prinzip des Walzenvorschubes basiert grundsätzlich auf zumindest zwei Walzen, wovon mindestens eine erste Walze auf einer ersten Seite (beispielsweise oberhalb) des zu fördernden Werkstücks und eine zweite Walze auf einer gegenüberliegenden Seite (beispielsweise unterhalb) des zu fördernden Werkstücks angeordnet ist. Wenn der Walzenvorschub zwei Walzen umfasst, sind diese typischerweise gegenüberliegend angeordnet. Andere Anordnungen sind ebenfalls möglich. Beispielsweise kann ein Walzenvorschub drei Walzen (oder eine andere Zahl von Walzen) umfassen, wobei die Walzen versetzt zueinander angeordnet sind, sodass das Werkstück in einer Art Wellenbewegung durch die Walzen gefördert wird.

Zumindest eine der Walzen ist eine angetriebene Walze. Zum Vorschieben/Fördern wird das Werkstück in einen Spalt, der zwischen den Walzen ausgebildet ist, eingeführt. Durch eine gleichlaufende Drehung der Walzen wird das Werkstück sodann vorgeschoben/gefördert. Die Drehgeschwindigkeit der Walzen bestimmt die Förder- bzw. Vorschubgeschwindigkeit.

In Materialfördervorrichtungen, insbesondere Walzenvorschüben, müssen die Walzen gelagert werden. Zu den Anforderungen, die an diese Lagerungen gestellt werden, zählen unter anderem die Zuverlässigkeit der Lagerung, sowie eine Flexibilität der Montage/Demontage. Insbesondere kann es vorkommen, dass Walzen im Laufe des Lebenszyklus' beschädigt werden und getauscht werden müssen. Ferner kann eine Walze mit einer anderen Beschaffenheit, beispielsweise einer anderen Profilierung installiert werden. Der Austausch/die Installation sollte vereinfacht durchgeführt werden können mit möglichst wenig Personalaufwand. Zudem sollte die Lagerung an sich wenig anfällig für Beschädigungen sein, insbesondere bei Überlastzuständen, beispielsweise wenn hohe Drehmomente anliegen.

Herkömmliche Walzen, umfassen typischerweise einen Walzenkörper, an dem beidseitig Lagerwellen drehfest angebracht sind. Die Lagerwellen dienen der Lagerung der Walze, der Abgabe eines Abtriebsmoments und/oder der Aufnahme eines Antriebsmoments. Typischerweise ist jede Walze separat gelagert. Eine Antriebswelle eines Motors oder eines Getriebes, die ein Antriebsmoment auf die Walze überträgt, bzw. eine Abtriebswelle, die ein Abtriebsmoment der Walze aufnimmt muss zusätzlich gelagert werden. Für eine Walzenanordnung müssen somit typischerweise jedenfalls vier Lagerstellen bereitgestellt werden.

Eine Weiterentwicklung dieser zuvor genannten Art der Lagerung stellt beispielsweise der bekannte Stand der Technik nach EP 3 974 079 A1 der vorliegenden Anmelderin dar. Darin wird eine Rohrwalze mit einer Walzfläche mit einem hohlen Innenbereich offenbart. Ferner weist die Rohrwalze eine erste und eine zweite Lagerfläche auf. Der Durchmesser der zweiten Lagerfläche ist kleiner als der Durchmesser der ersten Lagerfläche. Die Lagerflächen sind integral mit der Rohrwalze ausgebildet. Dies ermöglicht einen vereinfachten Einbau der Rohrwalze in einen Walzenvorschub. Beispielsweise kann die Rohrwalze mit dem kleinen Lagerdurchmesser der zweiten Lagerfläche voran in den Walzenvorschub in axialer Richtung eingeschoben bzw. entnommen werden.

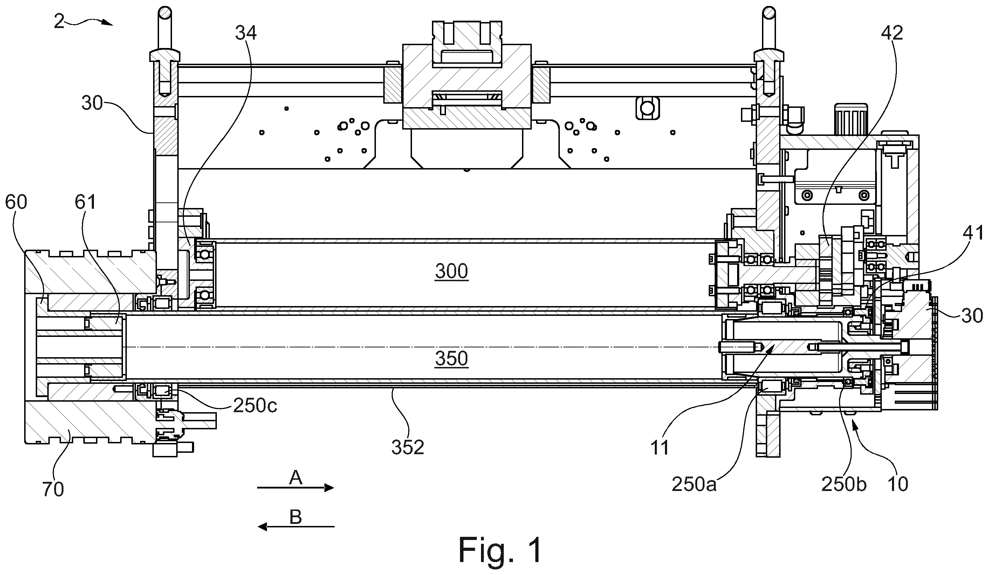

Der bekannte Stand der Technik nach DE 20 2022 001624 U1 der vorliegenden Anmelderin schlägt eine weitere Lösung zur Lagerung vor. Es ist ein Walzenvorschub mit einem Grundkörper, einer Rohrwalze und einer Lagerwelle offenbart. Die Lagerwelle und die Rohrwalze sind dazu eingerichtet, lösbar miteinander zur drehfesten Verbindung verbunden zu werden. Die lösbare Verbindung zwischen der Lagerwelle und der Rohrwalze wird über einen Mitnehmer bereitgestellt. Die Rohrwalze kann vereinfacht von der Lagerwelle getrennt werden und axial aus dem Grundkörper und/oder aus dem Walzenvorschub eingeschoben und entnommen werden (vgl. Fig. 1).

DE 39 08 010 A1 zeigt eine weitere Lagervorrichtung für eine Rohrwalze mit einer Betätigungsvorrichtung und einem Kupplungsglied.

Die Vorschläge, die im Stand der Technik zur Lagerung von Rotationskörpern, insbesondere für Walzen in Walzenvorschübe in den vergangen Jahren gemacht wurden zeigten bereits beträchtliche Fortschritte hinsichtlich Flexibilität, Zuverlässigkeit und Anwendbarkeit. Jedoch besteht weiterhin ein Bedarf für Verbesserung.

Eine Aufgabe der vorliegenden Erfindung ist es daher, die Nachteile des Stands der Technik zu überwinden. Insbesondere widmet sich die vorliegende Erfindung der Aufgabe, eine Lagerungsanordnung für Rohrwalzen von Walzenvorschübe bereitzustellen, die eine flexible und sichere Verbindung zwischen Rohrwalze und Grundkörper ermöglicht. Die Lagerungsanordnung soll den eingangs genannten Anforderungen genügen. Außerdem soll die Lagerungsanordnung einen vereinfachten Ein-/ und Ausbau einer Walze im Walzenvorschub ermöglichen. Es ist generell eine Aufgabe der Erfindung eine Lagerungsanordnung bereitzustellen, die konstruktiv einfach gestaltet und kostengünstig ist. Zudem soll ein Walzenvorschub bereitgestellt werden, der die Vorteile der Lagerungsanordnung umfasst und einen vereinfachten Einbau bzw. einen leichten Austausch der Rohrwalze(n) ermöglicht.

### 3. Zusammenfassung der Erfindung

Die obigen Aufgaben sowie weitere Aufgaben, die sich aus der folgenden Beschreibung ergeben, werden durch den Gegenstand der unabhängigen Ansprüche gelöst. Bevorzugte Ausführungsformen sind Gegenstand der abhängigen Ansprüche, und der Fachmann findet Hinweise auf andere geeignete Ausführungsformen der vorliegenden Erfindung in der Offenbarung der vorliegenden Anmeldung.

Die Ziele und Aufgaben der vorliegenden Erfindung, werden unter anderem mit einer Lagerungsanordnung für eine Rohrwalze, sowie einem entsprechenden Walzenvorschub gelöst. Die im Folgenden für die Lagerungsanordnung gezeigten technischen Eigenschaften, die Vorteile der Lagerungsanordnung und die Verbesserungen gegenüber dem Stand der Technik treffen genauso auf den Walzenvorschub zu.

### Lagerungsanordnung für eine Rohrwalze

Eine **1.** Ausführungsform der Erfindung betrifft eine Lagerungsanordnung für eine Rohrwalze, wie zum Beispiel für eine Rohrwalze eines Walzenvorschubs, die Lagerungsanordnung umfassend: eine Lagerwelle, die dazu eingerichtet ist, in Eingriff mit der Rohrwalze und mit einem Grundkörper des Walzenvorschubs zu kommen; eine zentrale Spannvorrichtung, die sich zumindest zum Teil axial durch die Lagerwelle erstreckt, und so eingerichtet ist, dass sie die Lagerungsanordnung in einen montierten Zustand, in dem die Lagerwelle drehfest mit der Rohrwalze verbunden ist, und in einen demontierten Zustand überführt; wobei die Lagerwelle eine Durchgangsöffnung aufweist, in welcher die zentrale Spannvorrichtung zumindest zum Teil aufgenommen ist; wobei die zentrale Spannvorrichtung dazu eingerichtet ist, dass im montierten Zustand der Lagerungsanordnung eine Kraft im Wesentlichen in radialer Richtung zwischen der Lagerwelle und der Rohrwalze wirkt, um die Lagerwelle drehfest mit der Rohrwalze zu verbinden.

Die erfindungsgemäße Lagerungsanordnung ermöglicht eine flexible und sichere Lagerung der Rohrwalze des Walzenvorschubs und eine vereinfachte Verbindung zwischen der Lagerungsanordnung und der Rohrwalze. Insbesondere kann diese Verbindung vereinfacht gelöst werden. Mithin ist ein vereinfachter Ausbau der Rohrwalze aus dem Walzenvorschub ermöglicht. Vorteilhaft ist dazu keine umfangreiche Demontage des Walzenvorschubs notwendig. Die zentrale Spannvorrichtung ermöglicht beispielsweise, dass die Lagerwelle der Lagerungsanordnung bei der Demontage im Walzenvorschub verbleiben kann. Bei einem erneuten Einbau der Rohrwalze oder einer anderen Rohrwalze, kann die Rohrwalze mit der Lagerungsanordnung in Verbindung gebracht werden ohne großen Personalaufwand.

Die Lagerwelle ist dazu eingerichtet, in Eingriff mit der Rohrwalze und mit einem Grundkörper des Walzenvorschubs zu kommen. Dies kann so verstanden werden, dass die Lagerwelle im Grundkörper gelagert ist. Beispielsweise kann die Lagerwelle eine oder mehrere Lagerflächen aufweisen, die mit einem oder mehreren Lagern (Rotationslager wie bspw. Gleitlager, Wälzlager) zusammenwirken können. Das eine oder die mehreren Lager können vom Vorschub umfasst sein, und mit Lagerflächen des Grundkörpers zusammenwirken. Mithin kann die Lagerwelle um eine entsprechende Drehachse drehbar gelagert sein.

Der Grundkörper kann ein Bauteil des Walzenvorschubs sein. Insbesondere kann der Grundkörper ein tragendes Element des Walzenvorschubs sein. Der Grundkörper kann mehrstückig ausgebildet sein und beispielsweise ein Gehäuse umfassen.

Der Grundkörper kann so ausgestaltet sein, dass die Rohrwalze in axialer Richtung aus dem Grundkörper entnommen werden kann. Die axiale Richtung kann dabei im Wesentlichen parallel zur Drehachse der Rohrwalze ausgerichtet sein. Vorzugsweise stimmt die axiale Richtung im Wesentlichen mit der Drehachse der Rohrwalze überein. Die Rohrwalze kann vorzugsweise zu einer Seite des Grundkörpers entnommen werden, auf welcher sich im Wesentlichen keine Getriebeelemente zur Übertragung von Bewegungen auf die Rohrwalze oder von der Rohrwalze weg befinden.

Zur axialen Entnahme der Rohrwalze kann der Grundkörper zum Beispiel eine Installationsöffnung aufweisen, durch die die Rohrwalze axial eingeschoben bzw. entnommen werden kann. Die Installationsöffnung kann mit einer Kappe insbesondere einer zentrierten Kappe verschlossen werden.

Die zentrale Spannvorrichtung dient dazu, Kräfte zwischen Bauteilen hervorzurufen. Die zentrale Spannvorrichtung kann ein, vorzugsweise mehrere separate Bauteile umfassen, die miteinander in lösbarer Verbindung sind.

Der Begriff "zentral" bedeutet, dass die Spannvorrichtung beispielsweise in einem radial betrachtet zentralen Bereich der Lagerungsanordnung angeordnet ist. Die Spannvorrichtung kann auch Bereiche radial außerhalb der Drehachse der Lagerwelle einnehmen. Beispielsweise kann die zentrale Spannvorrichtung auf der Drehachse der Lagerwelle angeordnet sein und eine Dimension, beispielsweise einen Durchmesser aufweisen, sodass es Bereiche der zentralen Spannvorrichtung gibt, die nicht auf der Drehachse angeordnet sind.

Der "montierte Zustand" der Lagerungsanordnung liegt üblicherweise beim Betrieb des Walzenvorschubs und/oder der Rohrwalze vor.

"Drehfest" ist hierbei so zu verstehen, dass eine Drehung (Rotation) der Lagerwelle eine Drehung (Rotation) der Rohrwalze bewirkt und/oder umgekehrt.

Der "demontierte Zustand" kann bei der Montage/Demontage der Rohrwalze vorliegen (dies kann auch als ein Ein-/Ausbau der Rohrwalze verstanden werden).

Durch den montierten und den demontierten Zustand, kann die Verbindung zwischen der Lagerwelle und der Rohrwalze auch als eine lösbare Verbindung bezeichnet werden. Dies kann bedeuten, dass die Lagerwelle getrennt von der Rohrwalze bereitgestellt werden kann. Ferner kann die Lagerwelle so mit der Rohrwalze verbunden werden, dass sich die Lagerwelle und die Rohrwalze im Betrieb des Walzenvorschubs als eine Einheit um die Drehachse der Rohrwalze drehen (drehfest).

Bei einem Ein-/Ausbau der ersten Rohrwalze kann die Verbindung gelöst werden, sodass die erste Rohrwalze entnommen werden kann, vorzugsweise ohne weitere Bauteile, wie beispielsweise die Lagerwelle entnehmen zu müssen. Zum Lösen ist vorteilhaft lediglich ein axiales Herausnehmen der ersten Rohrwalze erforderlich. Mithin bietet die Lagerungsanordnung den Vorteil, dass zumindest eine Seite der Rohrwalze selbstständig gelagert ist und die Lagerwelle der Lagerungsanordnung bei einem Ein-/Ausbau im Wesentlichen unverändert im Walzenvorschub verbleiben kann. Somit ermöglicht die Lagerungsanordnung insgesamt einen effizienten und ökonomischen Betrieb des Walzenvorschubs.

Die "Durchgangsöffnung" kann ein relativ großes Volumen umfassen, wodurch Material eingespart werden kann. Außerdem kann die zentrale Spannvorrichtung auf diese Weise leichter positioniert und/oder angeordnet werden.

Die zentrale Spannvorrichtung ist dazu eingerichtet, dass im montierten Zustand der Lagerungsanordnung eine Kraft im Wesentlichen in radialer Richtung zwischen der Lagerwelle und der Rohrwalze wirkt, um die Lagerwelle drehfest mit der Rohrwalze zu verbinden. Dabei ist "im Wesentlichen in radialer Richtung" so zu verstehen, dass ein Großteil der Kraft in radialer Richtung wirkt. Die Kraft kann auch ein oder mehrere Kraftkomponenten aufweisen, die in andere Raumrichtungen zeigen. In einem Beispiel hat die Kraft einen zu vernachlässigenden Beitrag in Umfangsrichtung der Rohrwalze.

Es versteht sich, dass eine Normalkraft, die auf eine Oberfläche mit Rauigkeiten wirkt, Kräfte entgegen einer Bewegungsrichtung der Oberfläche hervorrufen kann (Reibungskräfte). Diese Kräfte können sodann im Wesentlichen parallel zur Oberfläche verlaufen. Vorliegend bezieht sich die "Kraft im Wesentlichen in radialer Richtung" jedoch nicht auf solche durch die Rauigkeit hervorgerufene Kraft.

Es können auch ein oder mehrere weitere Bauteile zwischen der Lagerwelle und der Rohrwalze angeordnet sein. In einem solchen Fall wird die Kraft über diese ein oder mehreren weiteren Bauteile auf die Rohrwalze und entsprechend auch in umgekehrter Richtung auf die Lagerwelle übertragen.

Die drehfeste Verbindung zwischen der Lagerwelle und der Rohrwalze kann so verstanden werden, dass im Wesentlichen ein Kraftschluss erfolgt. Dies kann bedeuten, dass die Verbindung im Wesentlichen nicht über einen Formschluss erfolgt.

Eine **2.** Ausführungsform betrifft die vorherige Ausführungsform, wobei die Lagerwelle an einem axialen Endbereich konusförmig ausgebildet ist, wobei der axiale Endbereich im montierten Zustand die Rohrwalze zumindest zum Teil überlappt, um die Kraft auf die Rohrwalze zu bewirken.

Konusförmig kann bedeuten, dass die Lagerwelle am entsprechenden Endbereich wie ein Kegel geformt ist. Beispielsweise kann der Endbereich spitz zusammenlaufend bzw. verjüngt ausgebildet sein. Ferner kann der Endbereich wie ein abgestumpfter Kegel ausgebildet sein.

Der Endbereich kann sich über eine relativ großen axiale Länge der Lagerwelle erstrecken. Beispielsweise kann sich der Endbereich über 5% bis 50% der axialen Länge der Lagerwelle erstrecken.

Die Überlappung kann so verstanden werden, dass die Lagerwelle die Rohrwalze von außen oder von innen überlappt. Dies kann bedeuten, dass die Lagerwelle die Rohrwalze zum Teil umschließt oder die Rohrwalze die Lagerwelle zum Teil umschließt. Vorzugsweise überlappt die Lagerwelle die Rohrwalze von innen. Diese Ausführungsform hat den Vorteil, dass die Verbindung zwischen der Lagerwelle und der Rohrwalze vereinfacht ausgeführt ist. Insbesondere kann durch axiales Verschieben der Lagerwelle die Kraft in radialer Richtung beeinflusst werden.

Eine **3.** Ausführungsform betrifft eine der vorherigen Ausführungsformen, wobei die Spannvorrichtung ein erstes Spannelement und ein zweites Spannelement umfasst, die dazu eingerichtet sind, zumindest zum Teil ineinander zu greifen. Die Aufteilung der Spannvorrichtung in ein erstes und ein zweites Spannelement bietet den Vorteil, dass die Elemente separat ausgeführt sind und einen flexiblen Zusammenbau ermöglichen. Das Ineinandergreifen kann bedeuten, dass das erste und das zweite Elemente zumindest zum Teil miteinander verschraubt werden kann.

Eine **4.** Ausführungsform betrifft die vorherige Ausführungsform, wobei das erste Spannelement und das zweite Spannelement, im demontierten Zustand und/oder im Übergang vom demontierten Zustand in den montierten Zustand: drehbar zueinander eingerichtet sind, wobei eine Drehbewegung des ersten Spannelements eine Translationsbewegung der Lagerwelle relativ zum zweiten Spannelement bewirkt, um einen axialen Abstand von der Lagerwelle zur Rohrwalze zu verringern.

Diese Ausführungsform bietet den Vorteil, dass die Konstruktion vereinfacht ausgeführt ist und der axiale Abstand durch eine vorgegebene Mechanik eingestellt werden kann. Mithin kann auf diese Weise durch eine Drehbewegung ein axialer Überlappungsbereich der Lagerwelle und der Rohrwalze verändert werden. Im Übergang zum montierten Zustand wird der axiale Überlappungsbereich vergrößert. Dies kann eine größere radiale Kraft bewirken, wodurch die Verbindung fester im montierten Zustand ausgeführt ist.

Diese Ausführungsform kann auch bedeuten, dass sich das erste Spannelement aufgrund seiner Drehbewegung translatorisch auf das zweite Spannelement zubewegt.

Der axiale Abstand kann ermittelt werden, indem bspw. der Abstand von dem ersten oder dem gegenüberliegenden zweiten axialen Ende der Lagerwelle zu einem ersten oder zweiten Ende der Rohrwalze gemessen wird. Auch könnte der axiale Abstand unter Zuhilfenahme der Massenschwerpunkte der Rohrwalze und der Lagerwelle ermittelt werden.

Eine **5.** Ausführungsform betrifft eine der vorherigen Ausführungsformen 3 oder 4, wobei das erste Spannelement und das zweite Spannelement über einen Schraubkontakt, insbesondere ein Gewinde, im Eingriff sind.

Dies erleichtert die Bereitstellung einer Verbindung, der hierin beschriebenen Art.

Eine **6.** Ausführungsform betrifft eine der vorherigen Ausführungsformen 3 bis 5, wobei das zweite Spannelement einen im Wesentlichen zylindrischen Körper und ein Stangenelement umfasst, die lösbar miteinander verbunden sind, vorzugsweise über eine Schraubverbindung, wobei der zylindrische Körper dazu eingerichtet ist, auf die Rohrwalze, vorzugsweise von innen, aufgeschrumpft zu werden. Alternativ oder zusätzlich kann der zylindrische Körper dazu eingerichtet sein in die Rohrwalze eingeschweißt oder eingeklebt zu werden.

Der zylindrische Körper ist sodann an die Form der Rohrwalze angepasst. Ein Aufschrumpfen kann z.B. durch eine Veränderung der Temperatur der beteiligten Bauteile erfolgen. Von innen bedeutet, vom Hohlraum der Rohrwalze aus betrachtet. Das Aufschrumpfen erfolgt üblicherweise derart, dass auch im demontierten Zustand der zylindrische Körper auf die Rohrwalze aufgeschrumpft ist und im Wesentlichen fest verbunden ist.

Die lösbare Verbindung dieser Ausführungsform, kann insbesondere eine Schraube umfassen. Sodann können der zylindrische Körper und das Stangenelement separat hergestellt werden und montiert werden. Dies hat den Vorteil, dass das zweite Spannelement nicht als ein integrales Bauteil hergestellt werden muss. Mithin kann ein großes Spanvolumen erfindungsgemäß verhindert werden, wodurch die Kosten bei der Herstellung reduziert werden können.

Eine **7.** Ausführungsform betrifft die vorherige Ausführungsform, wobei der im Wesentlichen zylindrischen Körper eine zum konusförmigen Endbereich der Lagerwelle kongruente Innenumlauffläche aufweist, um im montierten Zustand die Kraft zu bewirken.

Die kongruente Innenumlauffläche ist passend bzw. übereinstimmend mit dem konusförmigen Endbereich. Dies erleichtert ein axiales Aufeinanderschieben. Auch kann die Kraft zur drehfesten Verbindung der Lagerwelle mit der Rohrwalze auf diese Weise bereitgestellt werden.

Eine **8.** Ausführungsform betrifft eine der vorherigen Ausführungsformen 6 oder 7, wobei das Stangenelement im Wesentlichen senkrecht vom zylindrischen Körper hervorsteht, und vorzugsweise eine Länge von mindestens 10%, bevorzugt mindestens 20%, weiter bevorzugt mindestens 30%, am meisten bevorzugt mindestens 35% der axialen Länge der Lagerwelle aufweist, und/oder von höchstens 60%, bevorzugt höchstens 55%, weiter bevorzugt höchstens 50%, noch weiter bevorzugt höchstens 45%, am meisten bevorzugt höchstens 40% der axialen Länge der Lagerwelle aufweist.

Dies bietet den Vorteil, dass das Stangenelement sich möglichst weit durch die Durchgangsöffnung erstreckt. Sodann kann das erste Spannelement vereinfacht von einer axial gegenüberliegenden Seite in die Durchgangsöffnung eingeführt werden und die Verbindung mit dem Stangenelement ermöglichen.

Das Stangenelement sollte eine ausreichende Mindestlänge aufweisen, um die Verbindung mit dem ersten Spannelement zu ermöglichen. Das Stangenelement sollte ferner nicht zu lang sein, da andernfalls ein Biegemoment an der Anschlussstelle zwischen Stangenelement und zylindrischem Körper zu groß sein könnte. Erfindungsgemäß wird sodann ein optimaler Kompromiss ermöglicht.

Eine **9.** Ausführungsform betrifft eine der vorherigen Ausführungsformen 6 bis 8, wobei der zylindrische Körper eine axiale Stirnfläche an einem ersten axialen Ende aufweist und zum gegenüberliegenden zweiten Ende im Wesentlichen hohl ausgebildet, wobei die Stirnfläche mehrere Öffnungen aufweist, die ringförmig angeordnet sind.

Die beiden Enden des zylindrischen Körpers können insbesondere axiale Enden sein. Die hohle Ausführung zum gegenüberliegenden zweiten Ende bietet den Vorteil, dass nur so viel Material wie nötig bereitgestellt werden muss. Außerdem kann auf diese Weise der konusförmige Endbereich beim Übergang vom demontierten in den montierten Zustand empfangen bzw. aufgenommen werden.

Die axiale Stirnfläche kann auch als ein Gegenlager verstanden werden. Dies kann das Verspannen der Bauteile der Spannvorrichtung begünstigen.

Die ringförmigen Öffnungen bieten den Vorteil, dass die Durchgangsöffnung der Lagerungsanordnung auch im montierten Zustand noch einsehbar ist. Außerdem kann so Material eingespart werden, wodurch das Massenträgheitsmoment der im Betrieb des Walzenvorschubs rotierenden Bauteile reduziert wird.

Eine **10.** Ausführungsform betrifft eine der vorherigen Ausführungsformen, wobei die Durchgangsöffnung einen ersten hohlen Abschnitt und einen zweiten hohlen Abschnitt umfasst, wobei der erste hohle Abschnitt einen kleineren Durchmesser als der zweite hohle Abschnitt aufweist.

Der kleinere Durchmesser des ersten hohlen Abschnitts bietet den Vorteil, dass das erste Spannelement verbessert geführt werden kann. Der Durchmesser des zweiten hohlen Abschnitts ist größer, um die Montage zu erleichtern. Außerdem kann auf diese Weise die Wandstärke klein ausgeführt sein, wobei gleichzeitig ein großer Außendurchmesser der Lagerwelle am axialen Bereich des zweiten hohlen Abschnitts erreicht wird. Vorteilhaft kann dieser Außendurchmesser geringfügig kleiner als der Innendurchmesser der Rohrwalze ausgeführt sein. Etwaige Kräfte, die durch Lager hervorgerufen werden, die an einer Außenfläche des axialen Bereichs der Lagerwelle des zweiten hohlen Abschnitts aufgenommen sind, können so reduziert werden. Mithin kann die mechanische Belastung der Lagerwelle reduziert werden.

Eine **11.** Ausführungsform betrifft eine der vorherigen Ausführungsformen, wobei die Lagerwelle eine erste Lagerfläche aufweist, die konfiguriert ist, um mit einem ersten Lager eines Walzenvorschubs zusammenzuwirken, und optional eine zweite Lagerfläche aufweist, die konfiguriert ist, um mit einem zweiten Lager des Walzenvorschubs zusammenzuwirken.

Die erste Lagerfläche kann mit einem Rotationslager, wie beispielsweise einem Gleitlager, einem Wälzlager, oder dergleichen zusammenwirken. Wirkt die erste Lagerfläche beispielsweise mit einem Gleitlager zusammen, kann die erste Lagerfläche eine entsprechende Oberflächengüte aufweisen, um sich in einer Gleitlagerbuchse des Gleitlagers radial zu drehen. Soll die erste Lagerfläche mit einem Wälzlager (bspw. Zylinderrollenlager oder Kugellager) zusammenwirken, kann die erste Lagerfläche einen Lagerring des Wälzlagers aufnehmen (z.B. formschlüssig oder kraftschlüssig). Die erste Lagerfläche kann gemäß dieser Ausführungsform integral mit der Lagerwelle ausgebildet sein. Beispielsweise kann die erste Lagerfläche an die Lagerwelle angedreht worden sein. Die erste Lagerfläche kann auch durch andere Herstellungsverfahren (z.B. spanend oder schleifend) hergestellt worden sein.

Die vorstehende Beschreibung für die erste Lagerfläche und das erste Lager gilt gleichfalls für die zweite Lagerfläche und das zweite Lager.

Eine **12.** Ausführungsform betrifft die vorherige Ausführungsform, wobei die erste Lagerfläche und optional die zweite Lagerfläche an einer Außenfläche der Lagerwelle des zweiten hohlen Abschnitts angeordnet sind.

Dies bietet den Vorteil, dass die erste Lagerfläche einen großen Durchmesser aufweist. Dies wird insbesondere im Vergleich zu herkömmlichen Lagerungen von Rohrwalzen deutlich, welche oftmals einen kleinen Durchmesser aufweisen. Mithin kann mit dieser Ausführungsform die Gefahr einer Beschädigung und/oder eines Überlastbruchs der Lagerwelle minimiert ist.

Die vorstehende Beschreibung für die erste Lagerfläche und das erste Lager gilt gleichfalls für die zweite Lagerfläche und das zweite Lager.

Eine **13.** Ausführungsform betrifft eine der vorherigen Ausführungsformen, wobei im demontierten Zustand die Lagerwelle im Wesentlichen nicht drehfest mit der Rohrwalze verbunden ist.

Im demontierten Zustand kann in einem ersten Beispiel die Verbindung zwischen der Lagerwelle und der Rohrwalze zumindest zum Teil gelöst sein. Ebenso kann in einem zweiten Beispiel die Rohrwalze gänzlich aus dem Vorschub entnommen sein. Eine Vielzahl weiterer Zwischenzustände zwischen diesen beiden zuvor genannten Beispielen sind vom "demontierten Zustand" umfasst.

Eine **14.** Ausführungsform betrifft eine der vorherigen Ausführungsformen, wobei die Überführung von dem montierten Zustand in den demontierten Zustand und/oder umgekehrt im Wesentlichen zerstörungsfrei erfolgt.

Dies bietet den Vorteil, dass die Montage/Demontage vielfach wiederholt werden kann, ohne einen Materialverschleiß zu bewirken.

Eine **15.** Ausführungsform betrifft eine der vorherigen Ausführungsformen, wobei sich die Durchgangsöffnung von einem ersten axialen Ende zum gegenüberliegenden zweiten axialen Ende der Lagerwelle erstreckt.

Diese Anordnung bietet eine vereinfachte Montagemöglichkeit. Insbesondere kann die zentrale Spannvorrichtung von beiden axialen Ende beliebig in die Durchgangsöffnung eingeführt werden, um darin aufgenommen zu werden.

Eine **16.** Ausführungsform betrifft eine der vorherigen Ausführungsformen, wobei der erste hohle Abschnitt einen Durchmesser aufweist, der mindestens 101%, bevorzugt mindestens 102%, weiter bevorzugt mindestens 103%, am meisten bevorzugt mindestens 105%, und/oder der höchstens 110%, bevorzugt höchstens 108%, weiter bevorzugt höchstens 106%, am meisten bevorzugt höchstens 105% des Durchmesser des Teils der Spannvorrichtung aufweist, der im montierten Zustand im ersten hohlen Abschnitt angeordnet ist.

Der Teil der zentralen Spannvorrichtung, der im montierten Zustand im ersten hohlen Abschnitt angeordnet ist, kann insbesondere das erste Spannelement sein.

Den Erfindern ist es gelungen, einen optimalen Wert der Durchmesserverhältnisse zu ermitteln. Dies ergibt sich daraus, dass das erste Spannelement möglichst vereinfacht im ersten hohlen Abschnitt aufgenommen werden sollte. Ein zu großer Durchmesser des ersten hohlen Abschnitts kann bedeuten, dass zu viel Platz zwischen der Bewandung des ersten hohlen Abschnitts und dem ersten Spannelement vorherrscht. Ein zu geringer Durchmesser verhindert die Einführung des ersten Spannelements in die Durchgangsöffnung. Aus diesen gegensätzlichen Anforderungen ergeben sich die hierin beschriebenen Werte der Durchmesserverhältnisse.

Eine **17.** Ausführungsform betrifft eine der vorherigen Ausführungsformen, wobei der erste hohle Abschnitt einen Durchmesser aufweist, der mindestens 8%, bevorzugt mindestens 10%, weiter bevorzugt mindestens 12%, am meisten bevorzugt mindestens 15%, und/oder der höchstens 60%, bevorzugt höchstens 40%, weiter bevorzugt höchstens 20%, am meisten bevorzugt höchstens 15% des Durchmessers des zweiten hohlen Abschnitts aufweist.

Mit dieser Ausführungsform kann ein optimaler Wert der Durchmesserverhältnisse des ersten und des zweiten hohlen Abschnitts bereitgestellt werden. Dies ergibt sich aus den Anforderungen der erleichterten Montage sowie einer Materialeinsparung.

Eine **18.** Ausführungsform betrifft eine der vorherigen Ausführungsformen, wobei die Lagerwelle am ersten hohlen Abschnitt einen Außendurchmesser aufweist, der mindestens 20%, bevorzugt mindestens 25%, weiter bevorzugt mindestens 30%, am meisten bevorzugt mindestens 35%, und/oder der höchstens 55%, bevorzugt höchstens 50%, weiter bevorzugt höchstens 45%, am meisten bevorzugt höchstens 40% des Außendurchmessers der Lagerwelle am zweiten hohlen Abschnitt aufweist.

Mit dieser Ausführungsform kann ein optimaler Wert der Verhältnisse der Außendurchmesser der Lagerwelle am ersten und am zweiten hohlen Abschnitt bereitgestellt werden. Dies ergibt sich aus den Anforderungen der erleichterten Montage sowie einer Materialeinsparung. Außerdem kann ein Lagerdurchmesser am zweiten hohlen Abschnitt entsprechend groß ausgeführt werden.

Eine **19.** Ausführungsform betrifft eine der vorherigen Ausführungsformen, wobei der erste hohle Abschnitt eine Länge von mindestens 10 mm, bevorzugt mindestens 30 mm, weiter bevorzugt mindestens 40 mm, am meisten bevorzugt mindestens 50 mm aufweist, und/oder von höchstens 100 mm, bevorzugt höchstens 80 mm, weiter bevorzugt höchstens 70 mm, am meisten bevorzugt höchstens 60 mm aufweist.

Mit dieser Ausführungsform kann ein optimaler Wert der Länge des ersten hohlen Abschnitts bereitgestellt werden. Zum einen kann der erste hohle Abschnitt auf diese Weise an die Ausgestaltung des Grundkörpers angepasst sein. Zudem kann der erste hohle Abschnitt eine ausreichende Länge aufweisen, um im Grundkörper entsprechend aufgenommen zu werden. Zum anderen ist die Länge möglichst kurz ausgeführt, um nicht unnötig Material zu beanspruchen. Aus diesen gegensätzlichen Anforderungen ergeben sich die hierin beschriebenen Werte.

In einem besonders bevorzugten Beispiel kann der erste hohle Abschnitt eine Länge von 56 mm aufweisen.

Eine **20.** Ausführungsform betrifft eine der vorherigen Ausführungsformen, wobei der zweite hohle Abschnitt eine Länge von mindestens 40 mm, bevorzugt mindestens 60 mm, weiter bevorzugt mindestens 80 mm, am meisten bevorzugt mindestens 90 mm aufweist, und/oder von höchstens 150 mm, bevorzugt höchstens 120 mm, weiter bevorzugt höchstens 100 mm, am meisten bevorzugt höchstens 90 mm aufweist.

Mit dieser Ausführungsform kann ein optimaler Wert der Länge des zweiten hohlen Abschnitts bereitgestellt werden. Zum einen kann der zweite hohle Abschnitt auf diese Weise an die Ausgestaltung des Grundkörpers angepasst sein sowie eine ausreichende Länge aufweisen, um im Grundkörper entsprechend aufgenommen zu werden. Auch kann mit einer großen Länge ein Abstand von zwei Lagern am zweiten hohlen Abschnitt groß ausgeführt sein. Dies bietet Vorteile hinsichtlich der Lagerungskräfte. Zum anderen sollte die Länge möglichst kurz ausgeführt sein, um nicht unnötig Material zu beanspruchen. Aus diesen gegensätzlichen Anforderungen ergeben sich die hierin beschriebenen Werte.

In einem besonders bevorzugten Beispiel kann der zweite hohle Abschnitt eine Länge von 90 mm aufweisen.

Eine **21.** Ausführungsform betrifft eine der vorherigen Ausführungsformen, wobei der erste hohle Abschnitt eine axiale Länge von mindestens 10%, bevorzugt mindestens 20%, weiter bevorzugt mindestens 30%, am meisten bevorzugt mindestens 35% der axialen Länge der Lagerwelle aufweist; und/oder von höchstens 60%, bevorzugt höchstens 55%, weiter bevorzugt höchstens 50%, noch weiter bevorzugt höchstens 45%, am meisten bevorzugt höchstens 40% der axialen Länge der Lagerwelle aufweist.

Mit dieser Ausführungsform kann ein optimaler Wert der Länge des ersten hohlen Abschnitts bereitgestellt werden. Zum einen kann der erste hohle Abschnitt auf diese Weise an die Ausgestaltung des Grundkörpers angepasst sein sowie eine ausreichende Länge aufweisen, um im Grundkörper entsprechend aufgenommen zu werden. Zum anderen ist die Länge möglichst kurz ausgeführt, um nicht unnötig Material zu beanspruchen. Aus diesen gegensätzlichen Anforderungen ergeben sich die hierin beschriebenen Werte.

### Walzenvorschub

Es versteht sich, dass im Wesentlichen die gleichen Vorteile, Merkmale und technischen Eigenschaften, die in Bezug auf die Lagerungsanordnung erwähnt sind, gleichermaßen auf den Walzenvorschub zutreffen. Ferner können die Vorteile, Merkmale und technischen Eigenschaften auch kombiniert und/oder austauschbar angewandt werden.

Eine **22.** Ausführungsform der Erfindung betrifft einen Walzenvorschub, umfassend: Eine Lagerungsanordnung nach einer der hierin beschriebenen Ausführungsformen; eine erste Rohrwalze mit einer Walzfläche; wobei, optional, die Lagerwelle der Lagerungsanordnung drehfest, vorzugsweise kraftschlüssig, mit der ersten Rohrwalze verbunden ist, wobei die Lagerungsanordnung vorzugsweise an einem axialen getriebeseitigen Endbereich der ersten Rohrwalze angeordnet ist.

Damit wird die Bauweise des Walzenvorschubs vereinfacht und die Komplexität reduziert. Die erste Rohrwalze kann nämlich axial in den Walzenvorschub eingeführt (bei einem Einbau) oder axial herausgenommen (bei einem Ausbau) werden. Dies wird durch die Lagerungsanordnung ermöglicht. Bei einem Verschleiß der ersten Rohrwalze kann diese sodann einfach entnommen werden, ohne den Walzenvorschub in Gänze auseinanderbauen zu müssen. Ferner kann auf ein Auseinanderbauen des Walzenvorschubs in Gänze vorteilhaft verzichtet werden bei der Installation einer Walze mit einer anderen Beschaffenheit, beispielsweise einer anderen Profilierung. Folglich kann ein Austausch von der ersten Rohrwalze schnell und mit geringem Personalaufwand erfolgen.

Der getriebeseitige Endbereich ist als ein solcher zu verstehen, an welchem eine Getriebeanordnung des Walzenvorschubs befindlich ist. Üblicherweise liegt der getriebeseitige Endbereich axial gegenüber vom motorseitigen axialen Endbereich.

Eine **23.** Ausführungsform betrifft die vorherige Ausführungsform des Walzenvorschubs, wobei der Walzenvorschub einen Grundkörper umfasst, der die erste Rohrwalze mittels der Lagerungsanordnung aufnimmt; wobei der Grundkörper eine erste Lagerfläche aufweist, die mit einer ersten Lagerfläche der Lagerwelle über ein erstes Lager des Walzenvorschubs assoziiert ist und optional eine zweite Lagerfläche aufweist, die mit einer zweiten Lagerfläche der Lagerwelle über ein zweites Lager des Walzenvorschubs assoziiert ist, um die erste Rohrwalze drehbar im Grundkörper zu lagern.

Es gelten die bereits im Zusammenhang mit der Lagerungsanordnung genannten technischen Eigenschaften und Vorteile.

In einem Beispiel kann der Grundkörper eine Kappe und eine Installationsöffnung umfassen. Die Kappe kann ein mechanisches Bauteil zum Verschließen der Installationsöffnung des Grundkörpers darstellen. Durch die Installationsöffnung kann die erste Rohrwalze axial eingeschoben bzw. entnommen werden.

Eine **24.** Ausführungsform betrifft eine der vorherigen Ausführungsformen des Walzenvorschubs, wobei der Walzenvorschub einen Elektromotor umfasst, der mit der ersten Rohrwalze gekoppelt werden kann, um die erste Rohrwalze anzutreiben, wobei der Walzenvorschub vorzugsweise eine Kupplungsvorrichtung umfassend ein Verbindungselement aufweist, das zumindest zum Teil innerhalb eines motorseitigen axialen Endbereichs der ersten Rohrwalze angeordnet ist, wobei die Kupplungsvorrichtung dazu eingerichtet ist, ein Drehmoment vom Elektromotor auf die erste Rohrwalze zu übertragen.

Der Elektromotor kann Teil des Walzenvorschubs sein, oder mit dem Walzenvorschub gekoppelt werden, um die erste Rohrwalze anzutreiben. Der Walzenvorschob kann auch so konfiguriert sein, dass weitere Rohrwalzen vorhanden sind, welche durch den Elektromotor auch oder ausschließlich angetrieben werden.

Eine **25.** Ausführungsform betrifft eine der vorherigen Ausführungsformen des Walzenvorschubs, wobei der Walzenvorschub, vorzugsweise der Grundkörper so ausgestaltet ist, dass die erste Rohrwalze in axialer Richtung aus dem Walzenvorschub, vorzugsweise Grundkörper entnommen werden kann, wobei die axiale Richtung vorzugsweise im Wesentlichen parallel zu einer Drehachse der ersten Rohrwalze ist.

Vorzugsweise stimmt die axiale Richtung im Wesentlichen mit der Drehachse der ersten Rohrwalze überein. Die erste Rohrwalze kann vorzugsweise zu einer Seite des Grundkörpers entnommen werden, auf welcher sich im Wesentlichen keine Getriebeelemente zur Übertragung von Bewegungen auf die erste Rohrwalze oder von der ersten Rohrwalze weg befinden.

Eine **26.** Ausführungsform betrifft eine der vorherigen Ausführungsformen des Walzenvorschubs, wobei der Walzenvorschub eine zweite Rohrwalze mit einer Walzfläche umfasst, wobei die erste und die zweite Rohrwalze derart angeordnet sind, dass sie dazu eingerichtet sind ein Werkstück zu fördern.

Eine **27.** Ausführungsform betrifft eine der vorherigen Ausführungsformen des Walzenvorschubs, wobei der Walzenvorschub eine Getriebeanordnung umfasst, und wobei ein erstes Getriebeelement der ersten Rohrwalze und ein zweites Getriebeelement der zweiten Rohrwalze zugeordnet ist, und wobei eine Drehbewegung der ersten Rohrwalze über das erste Getriebeelement auf das zweite Getriebeelement und sodann auf die zweite Rohrwalze übertragen wird.

Die Getriebeelemente können beispielsweise Zahnräder umfassen. Ferner kann das erste Getriebeelement mit der Lagerwelle der Lagerungsanordnung drehfest verbunden sein. Sodann wird eine Drehbewegung der ersten Rohrwalze auf das erste Getriebeelement über die Lagerwelle der Lagerungsanordnung übertragen.

Eine **28.** Ausführungsform betrifft eine der vorherigen Ausführungsformen des Walzenvorschubs, wobei die erste und/oder die zweite Rohrwalze eine Walzfläche aufweist mit einem Außendurchmesser im Bereich von 20 mm bis 200 mm, bevorzugt im Bereich von 30 mm bis 150 mm, weiter bevorzugt im Bereich von 50 mm bis 120 mm und am meisten bevorzugt im Bereich von 60 mm bis 100 mm.

Eine **29.** Ausführungsform betrifft eine der vorherigen Ausführungsformen des Walzenvorschubs, wobei die erste und/oder die zweite Rohrwalze eine Walzfläche aufweist mit einer axialen Länge im Bereich von 20 mm bis 1000 mm, bevorzugt im Bereich von 40 mm bis 800 mm, weiter bevorzugt im Bereich von 60 mm bis 600 mm und am meisten bevorzugt im Bereich von 80 mm bis 320 mm.

Mit der 28. und 29. Ausführungsform könnten optimale Ergebnisse erzielt werden. Dies ergibt sich aus unterschiedlichen Anforderungen, die sich aus einem zu fördernden Bandmaterial, einer Verschließfestigkeit, sowie höheren Taktraten ergeben.

Eine 30. Ausführungsform betrifft eine der vorherigen Ausführungsformen der Lagerungsanordnung, wobei die drehfeste Verbindung zwischen der Lagerwelle und der Rohrwalze im montierten Zustand im Wesentlichen durch Kontaktierung von zylindrischen oder konusförmigen Flächen der Lagerwelle, der zentralen Spannvorrichtung und der Rohrwalze erfolgt, wobei vorzugsweise keine Fläche der Rohrwalze, die im Wesentlichen senkrecht zur Umfangsrichtung der Rohrwalze ist, kontaktiert wird.

Durch die Lagerungsanordnung wie hierin allgemein beschrieben kann die Rohrwalze mit einer geringeren Wandstärke ausgeführt werden. Dies wirkt sich vorteilhaft auf das Massenträgheitsmoment der rotierenden Bauteile aus. Sodann muss weniger Energie für den Betrieb des Walzenvorschubs bereitgestellt werden. Insbesondere können erfindungsgemäß etwaige Lagerflächen auf der Rohrwalze selbst (bspw. durch abgedrehte Lagerflächen) reduziert und/oder vermieden werden. Durch solche abgedrehten Lagerflächen müsste die Wanddicke der Rohrwalze aus Stabilitätsgründen erhöht werden, wodurch ein Anstieg des Massenträgheitsmoments einhergeht.

### 4. Kurze Beschreibung der Figuren

Im Folgenden werden die beigefügten Figuren kurz beschrieben.
- **Fig. 1**: zeigt einen Walzenvorschub mit einer Lagerungsanordnung gemäß einer Ausführungsform der vorliegenden Erfindung im montierten Zustand der Lagerungsanordnung.
- **Fig. 2**: zeigt die Ausführungsform aus Fig. 1 in einer vergrößerten Detailansicht im demontierten Zustand der Lagerungsanordnung.
- **Fig. 3**: zeigt die Ausführungsform aus Fig. 1 und Fig. 2 in einer vergrößerten Detailansicht aus der Perspektive im montierten Zustand der Lagerungsanordnung.
- **Fig. 4**: zeigt eine vergrößerte Detailansicht einer Lagerungsanordnung gemäß einer Ausführungsform der vorliegenden Erfindung in einer Perspektivansicht.
- **Fig. 5**: zeigt die Ausführungsform aus Fig. 1 in einer weiteren vergrößerten Detailansicht im demontierten Zustand der Lagerungsanordnung.
- **Fig. 6**: zeigt die Ausführungsform aus Fig. 1 in einer anderen vergrößerten Detailansicht im demontierten Zustand der Lagerungsanordnung.

### 5. Detaillierte Beschreibung der Figuren

Im Folgenden werden nur einige mögliche Ausführungsformen der Erfindung im Detail beschrieben. Jedoch ist die vorliegende Erfindung nicht auf diese beschränkt und eine Vielzahl von anderen Ausführungsformen ist anwendbar, ohne vom Umfang der Erfindung abzuweichen. Die vorgestellten Ausführungsformen können auf vielfache Weise modifiziert und miteinander kombiniert werden, wann immer sie kompatibel sind, und bestimmte Merkmale können weggelassen werden, soweit sie entbehrlich erscheinen. Insbesondere können die offenbarten Ausführungsformen durch Kombination bestimmter Merkmale einer Ausführungsform mit einem oder mehreren Merkmalen einer anderen Ausführungsform modifiziert werden.

In den gesamten vorliegenden Figuren und der Beschreibung beziehen sich die gleichen Bezugszeichen auf die gleichen Elemente. Die Figuren sind möglicherweise nicht maßstabsgetreu, und die relative Größe, Proportionen und Darstellung von Elementen in den Figuren können zur Klarheit, Veranschaulichung und Zweckmäßigkeit übertrieben sein.

**Fig. 1** zeigt einen Walzenvorschub 2 mit einer Lagerungsanordnung 10 gemäß einer Ausführungsform der vorliegenden Erfindung im montierten Zustand der Lagerungsanordnung 10.

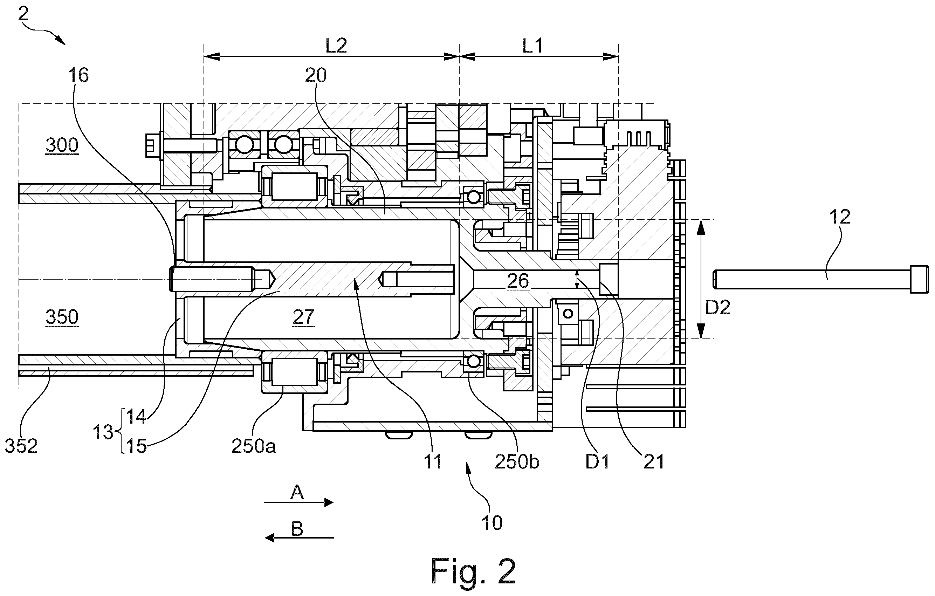

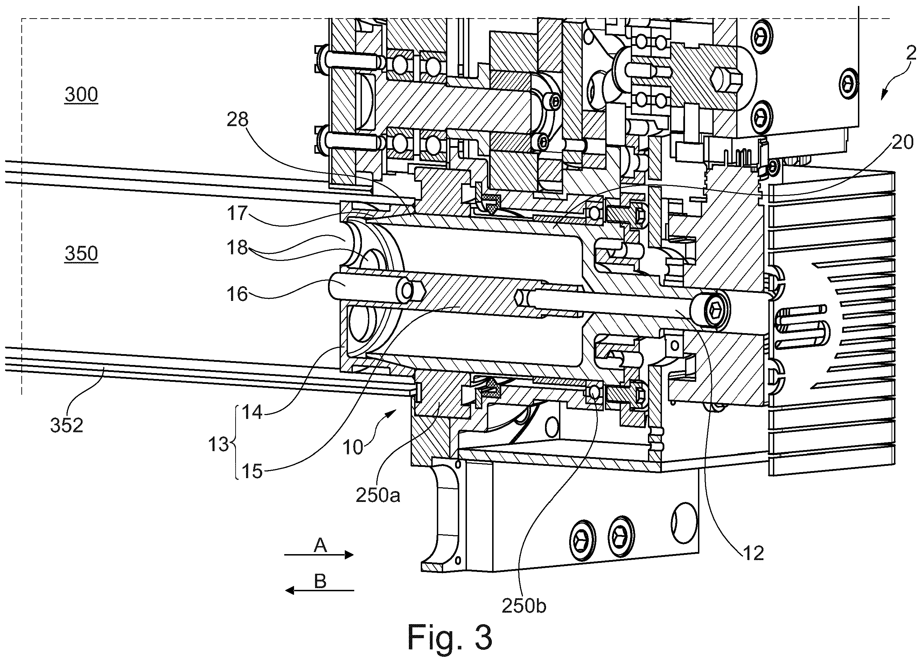

Die Lagerungsanordnung 10 umfasst eine Lagerwelle 20 (am besten in Fig. 2 ersichtlich, auch für Bezugszeichen 12, 13 und 25 geltend), die dazu eingerichtet ist, in Eingriff mit der Rohrwalze 350 und mit einem Grundkörper 30 des Walzenvorschubs 2 zu kommen. Die Lagerungsanordnung 10 umfasst auch eine zentrale Spannvorrichtung 11 (die ein erstes Spannelement 12, und ein zweites Spannelement 13 umfassen kann), die sich zumindest zum Teil axial durch die Lagerwelle 20 erstreckt. Es ist zu erkennen, dass die Spannvorrichtung 11 zur rechten Seite in Fig. 1 mit der Lagerwelle 20 nahezu bündig abschließt und zur linken Seite über die Lagerwelle 20 axial hinausragt. Die zentrale Spannvorrichtung 11 ist so eingerichtet, dass sie die Lagerungsanordnung 10 in einen montierten Zustand (Fig. 1, 3), in dem die Lagerwelle 20 drehfest mit der Rohrwalze 350 verbunden ist, und in einen demontierten Zustand überführt (Fig. 2, 4, 6) werden kann. Im demontierten Zustand ist die Lagerwelle 20 im Wesentlichen nicht drehfest mit der Rohrwalze 350 verbunden.

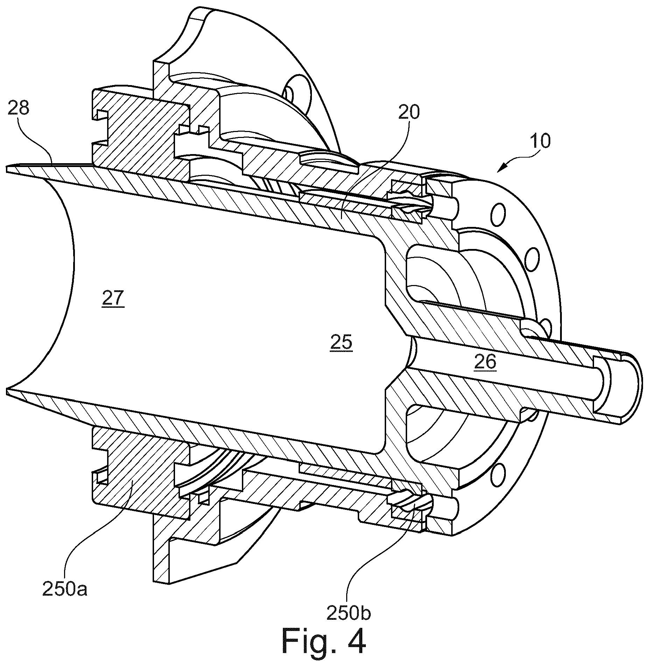

Die Lagerwelle 20 weist eine Durchgangsöffnung 25 (gebildet aus 26 und 27, wie am besten in Fig. 4 ersichtlich) auf, in welcher die zentrale Spannvorrichtung 11 zumindest zum Teil aufgenommen ist. Die zentrale Spannvorrichtung 11 ist ferner dazu eingerichtet, im montierten Zustand der Lagerungsanordnung 10 eine Kraft im Wesentlichen in radialer Richtung zwischen der Lagerwelle 20 und der Rohrwalze 350 zu bewirken, um die Lagerwelle 20 drehfest mit der Rohrwalze 350 zu verbinden.

Der Grundkörper 30 hat eine erste Lagerfläche, die mit einer ersten Lagerfläche der Lagerwelle 20 über ein erstes Lager 250a des Walzenvorschubs 2 assoziiert ist. Ferner hat der Grundkörper 30 eine zweite Lagerfläche, die mit einer zweiten Lagerfläche der Lagerwelle 20 über ein zweites Lager 250b des Walzenvorschubs 2 assoziiert ist. Somit kann die Rohrwalze 350 drehbar im Grundkörper 30 mittels der Lagerungsanordnung 10 gelagert werden. Die Rohrwalze 350 weist ferner eine Walzfläche 352 auf.

Es ist zu erkennen, dass die Lagerungsanordnung 20 an einem axialen getriebeseitigen Endbereich der Rohrwalze 350 angeordnet ist.

Am gegenüberliegenden motorseitigen Endbereich der Rohrwalze 350 ist ein Elektromotor 70 vorgesehen, der mit der Rohrwalze 350 gekoppelt werden kann, um die Rohrwalze 350 anzutreiben. Ferner hat der Walzenvorschub 2 eine Kupplungsvorrichtung 60 umfassend ein Verbindungselement 61. Das Verbindungselement 61 (bspw. ein Konus-Spannelement) ist zumindest zum Teil innerhalb des motorseitigen axialen Endbereichs der Rohrwalze 350 angeordnet. Die Kupplungsvorrichtung 60 ist dazu eingerichtet, ein Drehmoment vom Elektromotor 70 auf die Rohrwalze 350 zu übertragen.

Der Walzenvorschub 2 umfasst ferner eine zweite Rohrwalze 300 mit einer Walzfläche, wobei die erste 350 und die zweite 300 Rohrwalze derart angeordnet sind, dass sie ein Werkstück fördern können. Der Walzenvorschub 2 umfasst außerdem eine Getriebeanordnung, wobei ein erstes Getriebeelement 41 der ersten Rohrwalze 350 und ein zweites Getriebeelement 42 der zweiten Rohrwalze 300 zugeordnet ist. Eine Drehbewegung der ersten Rohrwalze 350 wird über das erste Getriebeelement 41 auf das zweite Getriebeelement 42 und sodann auf die zweite Rohrwalze 300 übertragen.

**Fig. 2** zeigt die Ausführungsform aus Fig. 1 in einer vergrößerten Detailansicht im demontierten Zustand der Lagerungsanordnung 10.

Die Lagerwelle 20 ist an einem axialen Endbereich (in Fig. 2 zur linken Seite) konusförmig 28 (Fig. 3) ausgebildet, wobei der axiale Endbereich im montierten Zustand die Rohrwalze 350 zumindest zum Teil axial überlappt, um die Kraft auf die Rohrwalze zu bewirken. Insbesondere überlappt der axiale Endbereich der Lagerwelle 20 die Rohrwalze 350 so, dass die Lagerwelle 20 im Überlappungsbereich innerhalb der Rohrwalze befindlich ist.

Die zentrale Spannvorrichtung 11 umfasst ein erstes Spannelement 12, beispielsweise eine Verbindungsschraube, und ein zweites Spannelement 13, die dazu eingerichtet sind, zumindest zum Teil ineinander zu greifen.

Das erste Spannelement 12 und das zweite Spannelement 13 sind im demontierten Zustand und/oder im Übergang vom demontierten Zustand in den montierten Zustand drehbar zueinander eingerichtet. Insbesondere bewirkt eine Drehbewegung des ersten Spannelements 12 eine axiale Translationsbewegung der Lagerwelle 20 relativ zum zweiten Spannelement 13. Auf diese Weise kann ein axialer axialen Abstand von der Lagerwelle 20 zur Rohrwalze 350 verringert werden. Dies begünstigt eine kraftschlüssige Verbindung zwischen der Lagerungsanordnung 10 und der Rohrwalze 350 im montierten Zustand. Insbesondere weist die Durchgangsöffnung 25 (insbesondere der erste hohle Abschnitt 26) an der rechten Seite in Fig. 2 einen Absatz 21 auf, an dem sich das erste Spannelement 12 axial abstützen kann, um bei einer Drehbewegung des ersten Spannelements 12 den Abstand von der Lagerwelle 20 zur Rohrwalze 350 zu verringern. Das erste Spannelement 12 und das zweite Spannelement 13 sind über einen Schraubkontakt im Eingriff.

Der Durchmesser D1 des ersten hohlen Abschnitts 26 (auch in Fig. 4 gekennzeichnet) kann zwischen 5 und 15 mm betragen. In dieser Ausführungsform beträgt D1 6.4 mm.

Der Durchmesser D2 des zweiten hohlen Abschnitts 27 (auch in Fig. 4 gekennzeichnet) kann zwischen 20 und 60 mm betragen. In dieser Ausführungsform beträgt D2 42 mm.

Der erste hohle Abschnitt 26 weist eine Länge L1 von mindestens 10 mm und/oder von höchstens 100 mm auf. In dieser Ausführungsform beträgt L1 56 mm.

Der zweite hohle Abschnitt 27 weist eine Länge L2 von mindestens 40 mm und/oder von höchstens 150 mm auf. In dieser Ausführungsform beträgt L2 90 mm.

**Fig. 3** zeigt die Ausführungsform aus Fig. 1 und Fig. 2 in einer vergrößerten Detailansicht aus der Perspektive im montierten Zustand der Lagerungsanordnung 10.

Das zweite Spannelement 13 umfasst einen im Wesentlichen zylindrischen Körper 14 und ein Stangenelement 15, die lösbar miteinander über eine Schraubverbindung verbunden sind. Der zylindrische Körper 14 ist dazu eingerichtet, auf die Rohrwalze 350 von innen aufgeschrumpft zu werden. Ferner kann der zylindrische Körper 14 in die Rohrwalze 350 eingeschweißt, eingeklebt oder eingeschraubt werden. Der im Wesentlichen zylindrischen Körper 14 weist eine zum konusförmigen Endbereich 28 der Lagerwelle 20 kongruente Innenumlauffläche 17 auf, um im montierten Zustand die Kraft zu bewirken.

Das Stangenelement 15 steht im Wesentlichen senkrecht vom zylindrischen Körper 14 hervor und hat eine Länge von mindestens 10% und von höchstens 60% der axialen Länge der Lagerwelle 20.

Der zylindrische Körper 14 hat eine axiale Stirnfläche an einem ersten Ende (in Fig. 3 zur linken Seite hin) und ist zum gegenüberliegenden zweiten Ende im Wesentlichen hohl ausgebildet. Die Stirnfläche weist mehrere Öffnungen 18 auf, die ringförmig angeordnet sind. In der Schnittzeichnung in Fig. 3 sind zwei Öffnungen 18 und eine halbe Öffnung 18 gezeigt.

**Fig. 4** zeigt eine vergrößerte Detailansicht einer Lagerungsanordnung 10 gemäß einer Ausführungsform der vorliegenden Erfindung in einer Perspektivansicht.

Die Durchgangsöffnung 25 ist dargestellt und weist einen ersten hohlen Abschnitt 26 und einen zweiten hohlen Abschnitt 27 auf, wobei der erste hohle Abschnitt 26 einen kleineren Durchmesser als der zweite hohle Abschnitt 27 hat.

Die Lagerwelle 20 weist eine erste Lagerfläche auf, die konfiguriert ist, um mit einem ersten Lager 250a des Walzenvorschubs 2 zusammenzuwirken. Ferner weist die Lagerwelle 20 eine zweite Lagerfläche auf, die konfiguriert ist, um mit einem zweiten Lager 250b des Walzenvorschubs zusammenzuwirken. Die erste und die zweite Lagerfläche sind an einer Außenfläche der Lagerwelle 20 des zweiten hohlen Abschnitts 27 angeordnet.

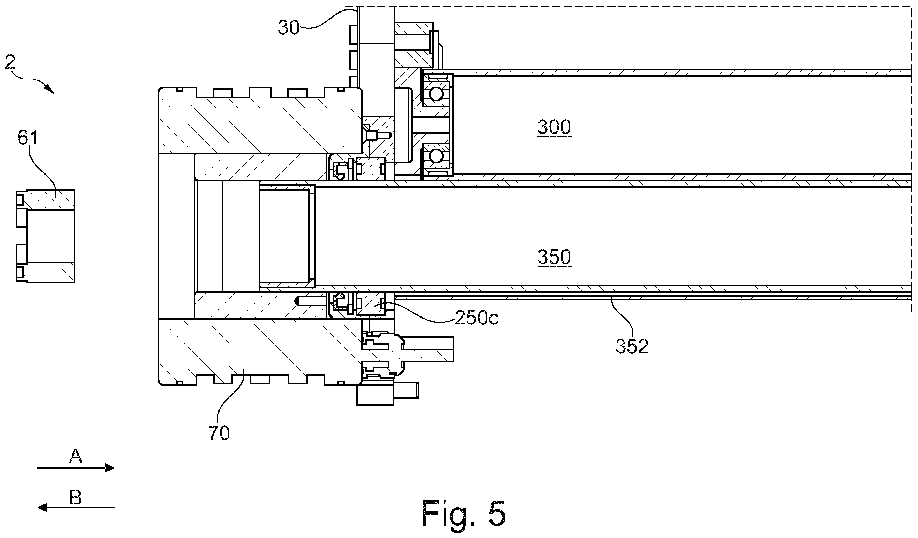

**Fig. 5** zeigt die Ausführungsform aus Fig. 1 in einer weiteren vergrößerten Detailansicht im demontierten Zustand der Lagerungsanordnung 10. Es ist zu erkennen, dass das Verbindungselement 61 am motorseitigen Endbereich der Rohrwalze 350 gelöst ist. Die Rohrwalze 350 kann zerstörungsfrei axial zur linken Seite hin entnommen werden.

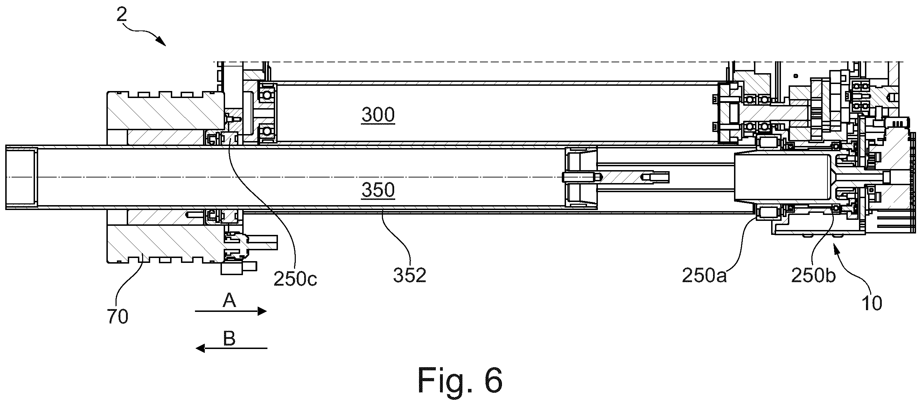

**Fig. 6** zeigt die Ausführungsform aus Fig. 1 in einer anderen vergrößerten Detailansicht im demontierten Zustand der Lagerungsanordnung 10. Es ist zu erkennen, dass die Rohrwalze 350 bereits zum Teil axial aus dem Walzenvorschub 2 entnommen ist. Der Walzenvorschub 2 kann ferner ein Lager 250c aufweisen, das am motorseitigen axialen Endbereich der Rohrwalze 300 angeordnet ist.

In einem Beispiel kann die Entnahme der Rohrwalze 300, 350 zur linken Seite (in den Fig. 1 bis 6) im Wesentlichen in ähnlicher Weise mittels einer Kappe und einer Installationsöffnung erfolgen.

Der Schutzumfang wird durch die Ansprüche bestimmt und ist nicht durch die Ausführungsbeispiele und/oder Figuren beschränkt.

### 6. Liste der Bezugszeichen

- 2: Walzenvorschub
- 10: Lagerungsanordnung
- 11: zentrale Spannvorrichtung
- 12: erstes Spannelement
- 13: zweites Spannelement
- 14: zylindrischer Körper
- 15: Stangenelement
- 16: Schraubverbindung
- 17: Innenumlauffläche des zylindrischen Körpers
- 18: Öffnungen der axialen Stirnfläche des zylindrischen Körpers
- 20: Lagerwelle
- 21: Absatz
- 25: Durchgangsöffnung
- 26: erster hohler Abschnitt
- 27: zweiter hohler Abschnitt
- 28: konusförmiger Endbereich

- 30: Grundkörper
- 41: erstes Getriebeelement
- 42: zweites Getriebeelement
- 60: Kupplungsvorrichtung
- 61: Verbindungselement
- 70: Motor

- 250a, 250b, 250c: Lager

- 300: Zweite Rohrwalze
- 350: Erste Rohrwalze
- 352: Walzfläche der ersten Rohrwalze

- A: Montage Richtung (Einbau)
- B: Demontage Richtung (Ausbau)
- L1: Länge erster hohler Abschnitt
- L2: Länge zweiter hohler Abschnitt
- D1: Durchmesser des ersten hohlen Abschnitts
- D2: Durchmesser des zweiten hohlen Abschnitts

## Patentansprüche

1. Lagerungsanordnung (10) für eine Rohrwalze, wie zum Beispiel für eine Rohrwalze (350) eines Walzenvorschubs (2), die Lagerungsanordnung umfassend:
eine Lagerwelle (20), die dazu eingerichtet ist, in Eingriff mit der Rohrwalze (350) und mit einem Grundkörper des Walzenvorschubs (2) zu kommen;
eine zentrale Spannvorrichtung (11), die sich zumindest zum Teil axial durch die Lagerwelle (20) erstreckt, und so eingerichtet ist, dass sie die Lagerungsanordnung in einen montierten Zustand, in dem die Lagerwelle (20) drehfest mit der Rohrwalze (350) verbunden ist, und in einen demontierten Zustand überführt;
wobei die Lagerwelle (20) eine Durchgangsöffnung (25) aufweist, in welcher die zentrale Spannvorrichtung (11) zumindest zum Teil aufgenommen ist; wobei die zentrale Spannvorrichtung (11) dazu eingerichtet ist, dass im montierten Zustand der Lagerungsanordnung (10) eine Kraft im Wesentlichen in radialer Richtung zwischen der Lagerwelle (20) und der Rohrwalze (350) wirkt, um die Lagerwelle (20) drehfest mit der Rohrwalze (350) zu verbinden.

2. Die Lagerungsanordnung (10) nach dem vorherigen Anspruch, wobei die Lagerwelle (20) an einem axialen Endbereich konusförmig ausgebildet ist, wobei der axiale Endbereich im montierten Zustand die Rohrwalze (350) zumindest zum Teil überlappt, um die Kraft auf die Rohrwalze (350) zu bewirken.

3. Die Lagerungsanordnung (10) nach einem der vorherigen Ansprüche, wobei die Spannvorrichtung (11) ein erstes Spannelement (12) und ein zweites Spannelement (13) umfasst, die dazu eingerichtet sind, zumindest zum Teil ineinander zu greifen.

4. Die Lagerungsanordnung (10) nach dem vorherigen Anspruch, wobei das erste Spannelement (12) und das zweite Spannelement (13), im demontierten Zustand und/oder im Übergang vom demontierten Zustand in den montierten Zustand:
drehbar zueinander eingerichtet sind, wobei eine Drehbewegung des ersten Spannelements (12) eine Translationsbewegung der Lagerwelle (20) relativ zum zweiten Spannelement (13) bewirkt, um einen axialen Abstand von der Lagerwelle (20) zur Rohrwalze (350) zu verringern.

5. Die Lagerungsanordnung (10) nach einem der Ansprüche 3 oder 4, wobei das zweite Spannelement (13) einen im Wesentlichen zylindrischen Körper (14) und ein Stangenelement (15) umfasst, die lösbar miteinander verbunden sind, vorzugsweise über eine Schraubverbindung, wobei der zylindrische Körper (14) dazu eingerichtet ist, auf die Rohrwalze (350), vorzugsweise von innen, aufgeschrumpft zu werden.

6. Die Lagerungsanordnung (10) nach dem vorherigen Anspruch sofern abhängig von Anspruch 2, wobei der im Wesentlichen zylindrischen Körper (14) eine zum konusförmigen Endbereich der Lagerwelle (20) kongruente Innenumlauffläche (17) aufweist, um im montierten Zustand die Kraft zu bewirken.

7. Die Lagerungsanordnung (10) nach einem der Ansprüche 5 oder 6, wobei das Stangenelement (15) im Wesentlichen senkrecht vom zylindrischen Körper (14) hervorsteht, und
vorzugsweise eine Länge von mindestens 10%, bevorzugt mindestens 20%, weiter bevorzugt mindestens 30%, am meisten bevorzugt mindestens 35% der axialen Länge der Lagerwelle (20) aufweist, und/oder
von höchstens 60%, bevorzugt höchstens 55%, weiter bevorzugt höchstens 50%, noch weiter bevorzugt höchstens 45%, am meisten bevorzugt höchstens 40% der axialen Länge der Lagerwelle (20) aufweist.

8. Die Lagerungsanordnung (10) nach einem der Ansprüche 5 bis 7, wobei der zylindrische Körper (14) eine axiale Stirnfläche an einem ersten Ende aufweist und zum gegenüberliegenden zweiten Ende im Wesentlichen hohl ausgebildet, wobei die Stirnfläche mehrere Öffnungen (18) aufweist, die ringförmig angeordnet sind.

9. Die Lagerungsanordnung (10) nach einem der vorherigen Ansprüche, wobei die Lagerwelle (20) eine erste Lagerfläche aufweist, die konfiguriert ist, um mit einem ersten Lager (250a) eines Walzenvorschubs zusammenzuwirken, und
optional eine zweite Lagerfläche aufweist, die konfiguriert ist, um mit einem zweiten Lager (250b) des Walzenvorschubs zusammenzuwirken.

10. Die Lagerungsanordnung (10) nach einem der vorherigen Ansprüche, wobei im demontierten Zustand die Lagerwelle (20) im Wesentlichen nicht drehfest mit der Rohrwalze (350) verbunden ist.

11. Die Lagerungsanordnung (10) nach einem der vorherigen Ansprüche, wobei die Durchgangsöffnung (25) einen ersten hohlen Abschnitt (26) und einen zweiten hohlen Abschnitt (27) umfasst, wobei der erste hohle Abschnitt (26) einen kleineren Durchmesser als der zweite hohle Abschnitt (27) aufweist.

12. Die Lagerungsanordnung (10) nach dem vorherigen Anspruch, wobei der erste hohle Abschnitt (26) einen Durchmesser D1 aufweist, der mindestens 8%, bevorzugt mindestens 10%, weiter bevorzugt mindestens 12%, am meisten bevorzugt mindestens 15%, und/oder
der höchstens 60%, bevorzugt höchstens 40%, weiter bevorzugt höchstens 20%, am meisten bevorzugt höchstens 15% des Durchmessers D2 des zweiten hohlen Abschnitts (27) aufweist.

13. Die Lagerungsanordnung (10) nach einem der Ansprüche 11 oder 12, wobei die Lagerwelle (20) am ersten hohlen Abschnitt (26) einen Außendurchmesser aufweist, der mindestens 20%, bevorzugt mindestens 25%, weiter bevorzugt mindestens 30%, am meisten bevorzugt mindestens 35%, und/oder
der höchstens 55%, bevorzugt höchstens 50%, weiter bevorzugt höchstens 45%, am meisten bevorzugt höchstens 40% des Außendurchmessers der Lagerwelle (20) am zweiten hohlen Abschnitt (27) aufweist.

14. Die Lagerungsanordnung (10) nach einem der Ansprüche 11 bis 13, wobei der zweite hohle Abschnitt (27) eine Länge L2 von mindestens 40 mm, bevorzugt mindestens 60 mm, weiter bevorzugt mindestens 80 mm, am meisten bevorzugt mindestens 90 mm aufweist, und/oder
von höchstens 150 mm, bevorzugt höchstens 120 mm, weiter bevorzugt höchstens 100 mm, am meisten bevorzugt höchstens 90 mm aufweist.

15. Walzenvorschub (2), umfassend:
eine Lagerungsanordnung (10) nach einem der vorherigen Ansprüche;
eine erste Rohrwalze (350) mit einer Walzfläche (352);
wobei, optional, die Lagerwelle (20) der Lagerungsanordnung (10) drehfest, vorzugsweise kraftschlüssig, mit der ersten Rohrwalze (350) verbunden ist, wobei die Lagerungsanordnung (10) vorzugsweise an einem axialen getriebeseitigen Endbereich der ersten Rohrwalze (350) angeordnet ist.

## Claims

1. A bearing arrangement (10) for a tube roll, such as for a tube roll (350) of a roll feed (2), the bearing arrangement comprising:
a bearing shaft (20), which is configured to engage with the tube roll (350) and with a base body of the roll feed (2);
a central clamping device (11), which extends at least partially axially through the bearing shaft (20) and is configured to transfer the bearing arrangement into an assembled state, in which the bearing shaft (20) is connected to the tube roll (350) in a rotationally fixed manner, and into a disassembled state;
wherein the bearing shaft (20) has a through-opening (25), in which the central clamping device (11) is at least partially received; wherein the central clamping device (11) is configured such that, in the assembled state of the bearing arrangement (10), a force acts substantially in the radial direction between the bearing shaft (20) and the tube roll (350) in order to connect the bearing shaft (20) to the tube roll (350) in a rotationally fixed manner.

2. The bearing arrangement (10) according to the preceding claim, wherein the bearing shaft (20) is formed in a conical manner at an axial end region, wherein the axial end region at least partially overlaps the tube roll (350) in the assembled state in order to bring about the force on the tube roll (350).

3. The bearing arrangement (10) according to one of the preceding claims, wherein the clamping device (11) comprises a first clamping element (12) and a second clamping element (13), which are configured to engage at least partially in one another.

4. The bearing arrangement (10) according to the preceding claim, wherein the first clamping element (12) and the second clamping element (13), in the disassembled state and/or in the transition from the disassembled state into the assembled state:
are configured to be rotatable with respect to one another, wherein a rotational movement of the first clamping element (12) brings about a translational movement of the bearing shaft (20) relative to the second clamping element (13) in order to reduce an axial distance from the bearing shaft (20) to the tube roll (350).

5. The bearing arrangement (10) according to one of claims 3 or 4, wherein the second clamping element (13) comprises a substantially cylindrical body (14) and a rod element (15), which are releasably connected to one another, preferably via a screw connection, wherein the cylindrical body (14) is configured to be shrunk onto the tube roll (350), preferably from the inside.

6. The bearing arrangement (10) according to the preceding claim insofar as dependent on claim 2, wherein the substantially cylindrical body (14) has an inner circumferential surface (17), which is congruent to the conical end region of the bearing shaft (20), in order to bring about the force in the assembled state.

7. The bearing arrangement (10) according to one of claims 5 or 6, wherein the rod element (15) protrudes substantially perpendicularly from the cylindrical body (14), and
preferably has a length of at least 10%, preferably at least 20%, further preferably at least 30%, most preferably at least 35% of the axial length of the bearing shaft (20), and/or
has at most 60%, preferably at most 55%, further preferably at most 50%, even further preferably at most 45%, most preferably at most 40% of the axial length of the bearing shaft (20).

8. The bearing arrangement (10) according to one of claims 5 to 7, wherein the cylindrical body (14) has an axial end face at a first end and is formed substantially hollow towards the opposite second end, wherein the end face has a plurality of openings (18) which are arranged in an annular manner.

9. The bearing arrangement (10) according to one of the preceding claims, wherein the bearing shaft (20) has a first bearing surface, which is configured to interact with a first bearing (250a) of a roll feed, and
optionally has a second bearing surface, which is configured to interact with a second bearing (250b) of the roll feed.

10. The bearing arrangement (10) according to one of the preceding claims, wherein, in the disassembled state, the bearing shaft (20) is connected to the tube roll (350) in a substantially non-rotationally fixed manner.

11. The bearing arrangement (10) according to one of the preceding claims, wherein the through opening (25) comprises a first hollow portion (26) and a second hollow portion (27), wherein the first hollow portion (26) has a smaller diameter than the second hollow portion (27).

12. The bearing arrangement (10) according to the preceding claim, wherein the first hollow portion (26) has a diameter D1 which is at least 8%, preferably at least 10%, further preferably at least 12%, most preferably at least 15%, and/or
which has at most 60%, preferably at most 40%, further preferably at most 20%, most preferably at most 15% of the diameter D2 of the second hollow portion (27).

13. The bearing arrangement (10) according to one of claims 11 or 12, wherein the bearing shaft (20) has an outer diameter at the first hollow portion (26) which is at least 20%, preferably at least 25%, further preferably at least 30%, most preferably at least 35%, and/or
which has at most 55%, preferably at most 50%, further preferably at most 45%, most preferably at most 40% of the outer diameter of the bearing shaft (20) at the second hollow portion (27).

14. The bearing arrangement (10) according to one of claims 11 to 13, wherein the second hollow portion (27) has a length L2 of at least 40 mm, preferably at least 60 mm, further preferably at least 80 mm, most preferably at least 90 mm, and/or
has at most 150 mm, preferably at most 120 mm, further preferably at most 100 mm, most preferably at most 90 mm.

15. A roll feed (2), comprising:
a bearing arrangement (10) according to one of the preceding claims;
a first tube roll (350) with a rolling surface (352);
wherein, optionally, the bearing shaft (20) of the bearing arrangement (10) is connected to the first tube roll (350) in a rotationally fixed manner, preferably in a force-fitting manner, wherein the bearing arrangement (10) is preferably arranged at an axial gear-side end region of the first tube roll (350).

## Revendications

1. Dispositif de palier (10) pour un rouleau tubulaire, tel par exemple qu'un rouleau tubulaire (350) d'un système d'avance à rouleaux (2), le dispositif de palier comprenant :
un arbre de palier (20), qui est agencé pour entrer en prise avec un rouleau tubulaire (350) et avec un corps de base du système d'avance à rouleaux (2) ;
un dispositif de serrage central (11), qui s'étend au moins en partie de manière axiale à travers l'arbre de palier (20), et est configuré pour faire passer le dispositif de palier (1) dans un état monté, dans lequel l'arbre de palier (20) est relié solidaire en rotation au rouleau creux (350), ou dans un état démonté ;
l'arbre de palier (20) comprenant un orifice de passage (25), dans lequel le dispositif de serrage central (11) est logé au moins en partie; le dispositif de serrage central (11) étant configuré pour faire agir à l'état monté du dispositif de palier (20) une force essentiellement dans la direction radiale de l'arbre de palier (20) et du rouleau tubulaire (350), pour relier d'une manière solidaire en rotation l'arbre de palier (20) et le rouleau tubulaire (350).

2. Dispositif de palier (10) selon la revendication précédente, dans lequel l'arbre de palier (20) est conçu sous forme conique sur une zone axiale terminale, la zone axiale terminale chevauchant à l'état monté, au moins en partie, le rouleau tubulaire (350), pour générer la force appliquée au rouleau tubulaire (350).

3. Dispositif de palier (10) selon l'une des revendications précédentes, dans lequel le dispositif de serrage (11) comprend un premier élément de serrage (12) et un deuxième élément de serrage (13), qui sont configurés pour entrer au moins en partie en prise l'un avec l'autre.

4. Dispositif de palier (10) selon la revendication précédente, dans lequel le premier élément de serrage (12) et le deuxième élément de serrage (13), à l'état démonté et/ou lors du passage de l'état démonté à l'état monté :
sont configurés de façon à pouvoir tourner l'un par rapport à l'autre, un mouvement de rotation du premier élément de serrage (12) provoquant un mouvement de translation de l'arbre de palier (20) par rapport au deuxième élément de serrage (13), pour diminuer l'écart axial entre l'arbre de palier (20) et le rouleau tubulaire (350).

5. Dispositif de palier (10) selon l'une des revendications 3 ou 4, dans lequel le deuxième élément de serrage (13) comprend un corps (14) essentiellement cylindrique et un élément de tige (15), qui sont reliés d'une manière amovible l'un à l'autre, de préférence par un assemblage vissé, le corps cylindrique (14) étant configuré pour être fretté sur le rouleau tubulaire (350), de préférence de l'intérieur.

6. Dispositif de palier (10) selon la revendication précédente, dans la mesure où elle dépend de la revendication 2, dans lequel le corps (14) essentiellement cylindrique présente une surface intérieure de contact (17) congruente à la zone terminale conique de l'arbre de palier (20).

7. Dispositif de palier (10) selon l'une des revendications 5 ou 6, dans lequel l'élément de tige (15) fait saillie, essentiellement perpendiculairement au corps cylindrique (14), et
présente de préférence une longueur d'au moins 10 %, de préférence d'au moins 20 %, plus préférentiellement d'au moins 30 %, tout spécialement d'au moins 35 % de la longueur axiale de l'arbre de palier (20), et/ou
d'au plus 60 %, de préférence d'au plus 55 %, plus préférentiellement d'au plus 50 %, encore plus préférentiellement d'au plus 45 %, tout spécialement d'au plus 40 % de la longueur axiale de l'arbre de palier (20).

8. Dispositif de palier (10) selon l'une des revendications 5 à 7, dans lequel le corps cylindrique (14) présente à un premier bout une surface d'extrémité axiale et est conçu essentiellement creux vers le deuxième bout opposé, la surface d'extrémité comportant plusieurs ouvertures (18), selon une disposition annulaire.

9. Dispositif de palier (10) selon l'une des revendications précédentes, dans lequel l'arbre de palier (20) comprend une première surface portante, qui est configurée pour coopérer avec un premier palier (250a) d'un système d'avance à rouleaux, et
comprend éventuellement une deuxième surface portante, qui est configurée pour coopérer avec un deuxième palier (250b) du système d'avance à rouleaux.

10. Dispositif de palier (10) selon l'une des revendications précédentes, dans lequel, à l'état démonté, l'arbre de palier (20) est relié au rouleau tubulaire (350), pour l'essentiel d'une manière non solidaire en rotation.

11. Dispositif de palier (10) selon l'une des revendications précédentes, dans lequel l'orifice de passage (25) comprend un premier tronçon creux (26) et un deuxième tronçon creux (27), le premier tronçon creux (26) ayant un diamètre plus petit que celui du deuxième tronçon creux.

12. Dispositif de palier (10) selon la revendication précédente, dans lequel le premier tronçon creux présente un diamètre D1 qui est d'au moins 8 %, de préférence d'au moins 10 %, plus préférentiellement d'au moins 12 %, tout spécialement d'au moins 15 %, et/ou
qui est d'au plus 60 %, de préférence d'au plus 40 %, plus préférentiellement d'au plus 20 %, tout spécialement d'au plus 15 %, du diamètre D2 du deuxième tronçon creux (27).

13. Dispositif de palier (10) selon l'une des revendications 11 ou 12, dans lequel l'arbre de palier (20) présente au niveau du premier tronçon creux (26) un diamètre extérieur qui est d'au moins 20 %, de préférence d'au moins 25 %, plus préférentiellement d'au moins 30 %, tout spécialement d'au moins 35 %, et/ou
qui est d'au plus 55 %, de préférence d'au plus 50 %, plus préférentiellement d'au plus 45 %, tout spécialement d'au plus 40 % du diamètre extérieur de l'arbre de palier (20) au niveau du deuxième tronçon creux (27).

14. Dispositif de palier (10) selon l'une des revendications 11 à 13, dans lequel le deuxième tronçon creux (27) présente une longueur L2 d'au moins 40 mm, de préférence d'au moins 60 mm, plus préférentiellement d'au moins 80 mm, tout spécialement d'au moins 90 mm, et/ou
d'au plus 150 mm, de préférence d'au plus 120 mm, plus préférentiellement d'au plus 100 mm, tout spécialement d'au plus 90 mm.

15. Système d'avance à rouleaux (2), comprenant :
un dispositif de palier (10) selon l'une des revendications précédentes ;
un premier rouleau creux (350) ayant une surface de laminage (352) ;
dans lequel, éventuellement, l'arbre de palier (20) du dispositif de palier (10) est relié d'une manière solidaire en rotation, de préférence à force, au premier rouleau creux (350), le dispositif de palier (10) étant de préférence disposé dans une zone terminale axiale côté engrenage du premier rouleau tubulaire (350).
